# EUROPEAN PATENT SPECIFICATION

(11) **EP 4 468 445 B1**
(45) Date of publication and mention of the grant of the patent: **04.03.2026**
(21) Application number: 23743482.4
(22) Date of filing: 19.01.2023
(51) Int. Cl.: H01M 10/42, H01M 10/058, H01M 50/572, H01M 50/586, H01M 50/533, H01M 50/538, H01M 10/04, H01M 10/0585

(54) **ELECTRODE ASSEMBLY HAVING SHORT-CIRCUIT PREVENTION STRUCTURE**
ELEKTRODENANORDNUNG MIT KURZSCHLUSSVERHINDERUNGSSTRUKTUR
ENSEMBLE ÉLECTRODE COMPRENANT UNE STRUCTURE DE PRÉVENTION DE COURT-CIRCUIT

(30) Priority: 19.01.2022 KR 20220007761
(43) Date of publication of application: 27.11.2024
(73) Proprietor: LG Energy Solution, Ltd., Seoul 07335 (KR)
(72) Inventor: KIM, Chorong, Daejeon 34122 (KR); AHN, Byoung Hoon, Daejeon 34122 (KR)
(74) Representative: Goddar, Heinz J.
(86) International application number: PCT/KR2023/000927
(87) International publication number: WO 2023/140638

(56) References cited:
- EP-A1- 2 802 029
- JP-A- 2015 146 237
- JP-A- 2018 026 334
- KR-A- 20060 022 358
- KR-A- 20150 041 353
- KR-B1- 100 646 550
- US-A1- 2021 098 769
- US-A1- 2021 305 630

## Description

### [Technical Field]

This application claims the benefit of priority to Korean Patent Application No. 10-2022-0007761, filed on January 19, 2022 in the Korean Intellectual Property Office.

The present invention relates to an electrode assembly, and more particularly, to an electrode assembly having a structure capable of preventing a phenomenon in which end portions of a positive electrode plate and a negative electrode plate partitioned by a separator are short-circuited.

### [Background Art]

With the growing technical development and demand for mobile devices, the demand for secondary batteries as energy sources is rapidly increasing, and in recent years, the use of secondary batteries as power sources for electric vehicles (EVs), hybrid electric vehicles (HEVs), and the like has been realized, and among such secondary batteries, lithium secondary batteries having high energy density, high discharge voltage, and output stability are in high demand.

Secondary batteries are classified according to the structure of an electrode assembly having a positive electrode/separator/negative electrode structure, and representative examples thereof include a jelly-roll (wound)-type electrode assembly having a structure in which long sheet-shaped positive and negative electrodes are wound with a separator interposed therebetween, a stack (laminate)-type electrode assembly in which multiple positive and negative electrodes are cut into units, each of which has a predetermined size, and stacked in sequence with a separator interposed therebetween, and a stack-folding type electrode assembly in which unit cells, for example, bi-cells or full cells, in which positive and negative electrodes of a predetermined unit are stacked with a separator interposed therebetween, are wound with a separator interposed therebetween.

In the electrode assembly having various structures, a positive electrode plate includes an area of a positive electrode current collecting portion in which a positive electrode active material is applied to both surfaces of a positive electrode metal foil constituting the positive electrode plate, and a positive electrode tab portion which is provided on one side of the positive electrode current collecting portion in a width direction and in which the positive electrode active material is not applied to the positive electrode metal foil. In addition, a negative electrode plate includes an area of a negative electrode current collecting portion in which a negative electrode active material is applied to both surfaces of a negative electrode metal foil constituting the negative electrode plate, and a negative electrode tab portion which is provided on one side of the negative electrode current collecting portion in a width direction and in which the negative electrode active material is not applied to the negative electrode metal foil.

In addition, a separator is interposed between the positive electrode plate and the negative electrode plate.

In a state in which the separator is interposed, the positive electrode tab portion and the negative electrode tab portion extend further outward than the separator in the width direction. At this time, the positive electrode tab portion may protrude toward one side in the width direction, and the negative electrode tab portion may protrude toward the other side in the width direction.

According to the structure as described above, when the positive electrode tab portion or the negative electrode tab portion is bent in a process of connecting electrode tabs, there is a possibility that the positive electrode tab portion or the negative electrode tab portion may come into contact with the negative electrode current collecting portion or the positive electrode current collecting portion disposed with the separator interposed therebetween to cause a short circuit.

Accordingly, a manufacturing method in which the other side end portion of a positive electrode current collecting portion and/or one side end portion of a negative electrode current collecting portion are prevented from being exposed by applying an insulating coating to a positive electrode tab portion and/or a negative electrode tab portion as disclosed in Patent Document 1 (KR 2021-0011584 A), or by bonding separators present on both sides of the other side end portion of the positive electrode current collecting portion and/or one side end portion of the negative electrode current collecting portion as disclosed in Patent Document 2 (KR 2021-0027023 A) has been proposed. US 2021/305630 A1, US 2021/098769 A1 and EP 2 802 029 A1 also disclose similar electrode assembly stack.

However, such short-circuit prevention structures have a problem that the short-circuit prevention effect is insignificant and thus the risk of short-circuit still exists, or that a cumbersome processing process must be added in a state in which a positive electrode plate, a separator, and a negative electrode plate are stacked to manufacture an electrode assembly.

### [Disclosure]

### [Technical Problem]

The present invention is designed to solve the above-mentioned problems, and directed to providing an electrode assembly capable of preventing a short circuit between a positive electrode plate and a negative electrode plate, and a manufacturing method thereof.

The present invention is also directed to providing an electrode assembly capable of implementing a short-circuit prevention structure of a positive electrode plate and a negative electrode plate of the electrode assembly while allowing additional cumbersome processes to be avoided in an electrode assembly manufacturing method, and a manufacturing method thereof.

The present invention is also directed to providing an electrode assembly capable of maintaining the dimension and shape of an electrode assembly structure before applying a short-circuit prevention structure of a positive electrode plate and a negative electrode plate of the electrode assembly even when the short-circuit prevention structure is applied, and a manufacturing method thereof.

Aspects according to the present invention are not limited to the above ones, and other aspects and advantages that are not mentioned above can be clearly understood from the following description and can be more clearly understood from the embodiments set forth herein. Additionally, the aspects and advantages in the present invention can be realized via means and combinations thereof that are described in the appended claims.

### [Technical Solution]

The present invention provides an electrode assembly structure in which a first electrode plate, a separator and a second electrode plate are stacked, and a manufacturing method thereof.

In order to solve the above-described problem, in the present invention, an insulating coating is formed on a slit surface of a first electrode plate and/or a slit surface of a second electrode plate.

The electrode assembly may have a structure in which a first current collecting portion of the first electrode plate and a second electrode tab portion of the second electrode plate face each other with an edge of the separator interposed therebetween.

The electrode assembly may have a structure in which a second current collecting portion of the second electrode plate and a first electrode tab portion of the first electrode plate face each other with the edge of the separator interposed therebetween.

The first electrode plate may include a first current collecting portion (a first coated portion) in which a first active material is applied to opposite surfaces of a first metal foil, and a first electrode tab portion (a first uncoated portion), to which the first active material is not applied, on a first side thereof in a width direction.

The second electrode plate may include a second current collecting portion (a second coated portion) in which a second active material is applied to opposite surfaces of a second metal foil, and a second electrode tab portion (a second uncoated portion), to which the second active material is not applied, on a first side thereof in the width direction.

The first electrode tab portion may extend further outward than the separator from one side end portion of the electrode assembly in the width direction to one side of the electrode assembly in the width direction.

At one side end portion of the electrode assembly, an insulating coating is formed on a slit surface of the second electrode plate, which is disposed adj acent to the first electrode tab portion with the separator interposed therebetween.

The slit surface may be formed by slitting the second current collecting portion of the second electrode plate.

The insulating coating may cover an entirety of the slit surface of the second electrode plate in a stacking direction of the electrode assembly.

The insulating coating may further cover a partial section of a first surface of the second electrode plate connected to the slit surface of the second electrode plate and facing the separator.

The insulating coating may further cover a partial section of a second surface of the second electrode plate, which is connected to the slit surface of the second electrode plate and opposite to the first surface.

A portion of the first electrode plate facing the portion on which the insulating coating is formed, with the separator therebetween may be the first electrode tab portion. Accordingly, even when a thickness of the portion of the second electrode plate, on which the insulating coating performed, is greater than a thickness of the second current collecting portion of the second electrode plate, a stacked structure of the electrode assembly may be maintained in a parallel configuration.

A corner portion of the second active material disposed on the slit surface of the second current collecting portion may have a processing surface with a decreasing thickness.

The insulating coating may cover the slit surface and the processing surface. Accordingly, a deviation between the thickness of the second current collecting portion and the thickness of the portion on which the insulating coating is formed may be minimized in the second electrode plate, thereby maintaining the stacked structure of the electrode assembly in a parallel configuration.

The processing surface may be formed by a slitting process. The slitting process may be performed by a method of supporting an edge of the second current collecting portion with a lower blade and pressing and cutting the edge of the second current collecting portion with an upper blade.

The processing surface may be formed by an additional pressing process after the slitting process. The pressing process may be a pressing roll process.

The processing surface may be processed by a roller for transferring the second electrode plate, after the slitting process.

The roller may be a pinch roller configured to support the slit surface of the second electrode plate.

The pinch roller may erect the second electrode plate transferred in a longitudinal direction from a horizontal posture.

The pinch roller may include a support surface supporting the slit surface and a center guide surface having a diameter gradually increasing from both side end portions of the support surface toward the outside.

The processing surface may be formed by the support surface.

The insulating coating may be formed on the slit surface disposed on a lower end portion of the erected second electrode plate.

The insulating coating may be formed by spray coating.

The insulating coating may be formed by dipping the slit surface into an insulating liquid.

The insulating coating liquid for the insulating coating may be in the form of a colloidal solution in which ceramic-based particles are dispersed.

The insulating coating liquid is applied to the slit surface and then cured to form the insulating coating.

After the second electrode plate is formed up to the insulating coating, the second electrode plate may be rewound on the roll and stored. That is, in the present invention, a method of applying a second active material to a second metal foil before stacking a first electrode plate, a separator, and a second electrode plate, slitting one side end portion of the second electrode plate in a width direction, and performing insulating coating on a slit surface is exemplified.

The first electrode plate may be a positive electrode plate, and the second electrode plate may be a negative electrode plate.

Alternatively, the first electrode plate may be a negative electrode plate, and the second electrode plate may be a positive electrode plate.

A width of the second current collecting portion may be greater than a width of the first current collecting portion. Accordingly, the slit surface of the second current collecting portion may face a first electrode tab portion with the separator interposed therebetween.

Alternatively, the width of the second current collecting portion may be less than the width of the first current collecting portion. Accordingly, the slit surface of the first current collecting portion may face a second electrode tab portion with the separator interposed therebetween.

In addition, the present invention further provides a method of manufacturing the electrode assembly.

The method includes preparing a second electrode plate, in which a second current collecting portion is formed by applying a second active material to both surfaces of a second metal foil, and a slit surface is formed by slitting the other side end portion of the second current collecting portion.

In addition, the method includes forming an insulating coating on the slit surface.

The insulating coating may be performed by spray coating or dipping coating.

Subsequently, the method includes stacking a first electrode plate, a separator, and the second electrode plate.

The method of manufacturing the electrode assembly may further include manufacturing a jelly-roll type electrode assembly by winding the first electrode plate, the separator, and the second electrode plate around a winding axis in a state in which the first electrode plate, the separator, and the second electrode plate are stacked.

In addition, the method may further include forming a bent surface by bending the first electrode tab portion, which is exposed from an end portion of the electrode assembly wound in a jelly-roll shape in the width direction, in a radial direction. Accordingly, the jelly-roll type electrode assembly may be manufactured.

Even when the first electrode tab portion is bent, since an end portion of the second electrode plate adj acent to the first electrode tab portion is provided with an insulating coating, a short circuit between the first electrode tab portion and the slit surface of the second electrode plate may be prevented.

Alternatively, the method of manufacturing the electrode assembly may further include stacking a plurality of unit cells in which the first electrode plate, the separator, and the second electrode plate are stacked, in the form of a stack. Accordingly, a stack-type electrode assembly may be manufactured.

Alternatively, the method may further include manufacturing unit cells in which the first electrode plate, the separator, and the second electrode plate are stacked, placing the unit cells on a folding separator, laminating the unit cells, and then folding the laminated folding separator in a stack-folding type. Accordingly, a stack-folding type electrode assembly may be manufactured.

### [Advantageous Effects]

According to an electrode assembly structure and a manufacturing method thereof according to the present invention, a structure capable of preventing a short circuit between a positive electrode plate and a negative electrode plate can be simply applied.

According to the present invention, a short-circuit prevention structure of a positive electrode plate and a negative electrode plate of an electrode assembly can be implemented, while additional cumbersome processes are not required in a manufacturing method of the electrode assembly.

According to the present invention, even when a short-circuit prevention structure of a positive electrode plate and a negative electrode plate of an electrode assembly is applied, a dimension, a shape, and the like of the electrode assembly structure before applying the short-circuit prevention structure can be maintained.

Specific effects are described along with the above-described effects in the section of detailed description.

### [Description of Drawings]

FIG. 1 is a cross-sectional view illustrating a portion of an electrode assembly according to a first embodiment of the present invention.
FIG. 2 is an enlarged view of one side end portion of the electrode assembly of FIG. 1 in a width direction.
FIG. 3 is a view illustrating a state in which a first electrode tab portion of the electrode assembly of FIG. 1 is bent.
FIGS. 4 and 5 are views illustrating a manufacturing process of the electrode assembly of FIG. 1.
FIG. 6 is an enlarged view of one side end portion of an electrode assembly according to a second embodiment of the present invention in the width direction.
FIG. 7 is an enlarged view of one side end portion of an electrode assembly according to a third embodiment of the present invention in the width direction.
FIG. 8 is an enlarged view of one side end portion of an electrode assembly according to a fourth embodiment of the present invention in the width direction.
FIG. 9 is a cross-sectional view of a jelly-roll type electrode assembly according to a fifth embodiment of the present invention.
FIG. 10 is a cross-sectional view of a stack-type electrode assembly according to a sixth embodiment of the present invention.
FIG. 11 is a development view of a stack-folding type electrode assembly according to a seventh embodiment of the present invention.
FIG. 12 is a schematic view of a device for manufacturing the second electrode plate according to the present invention.
FIG. 13 is a cross-sectional view taken along line XIII-XIII of FIG. 12.
FIG. 14 is a cross-sectional view taken along line XIV-XIV of FIG. 12.
FIG. 15 is a cross-sectional view taken along line XV-XV of FIG. 12.
FIG. 16 is a cross-sectional view taken along line XVI-XVI of FIG. 12.

### [Description of Reference Numerals]

1: electrode assembly
10: first electrode plate (positive electrode plate)
11: first metal foil
12: first active material
13: first current collecting portion
14: first electrode tab portion
20: second electrode plate (negative electrode plate)
21: second metal foil
22: second active material
225: processing surface
23: second current collecting portion
237: slit surface
24: second electrode tab portion
26: insulating coating
30: separator
40: folding separator
5: second electrode plate processing device
51: slitting device
52: transfer roller
53: pinch roller
531: center guide surface
532: support surface
54: insulating coating device
541: insulating coating liquid
542: dipping device
543: roller brush

### [Modes of the Invention]

The above objects, features and advantages will be described later in detail with reference to the accompanying drawings, and accordingly, those skilled in the art to which the present invention belongs will be able to easily implement the technical idea of the present invention. In describing the present invention, if it is determined that the detailed description of the known technology related to the present invention may unnecessarily obscure the subject matter of the present invention, the detailed description will be omitted. Hereinafter, preferred embodiments according to the present invention will be described in detail with reference to the accompanying drawings. In the drawings, the same reference numerals are used to indicate the same or similar components.

Although "first", "second", and the like may be used to describe various components, these components are not limited by these terms. These terms are only used to distinguish one component from another component, and unless otherwise stated, the first component may be the second component, of course.

Throughout the specification, unless otherwise stated, each component may be singular or plural.

Hereinafter, the arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

In addition, when a component is described as "linked", "coupled" or "connected" to another component, the components may be directly connected or connected to each other, but other components may be "interposed" between each component, or each component may be "linked", "coupled" or "connected" through other components.

Singular expressions used herein include plural expressions unless the context clearly dictates otherwise. In this application, terms such as "consisting of" or "comprising" should not be construed as necessarily including all of the various components or steps described in the specification. It should be construed that it may not include some of the components or some of the steps. or may further include additional components or steps.

Throughout the specification, when it says "A and/or B", it means A, B or A and B, unless otherwise specified, and when it says "C to D", it means C or more and D or less, unless otherwise specified.

Hereinafter, exemplary embodiments of the present invention will be described in detail with reference to the accompanying drawings.

### [First embodiment]

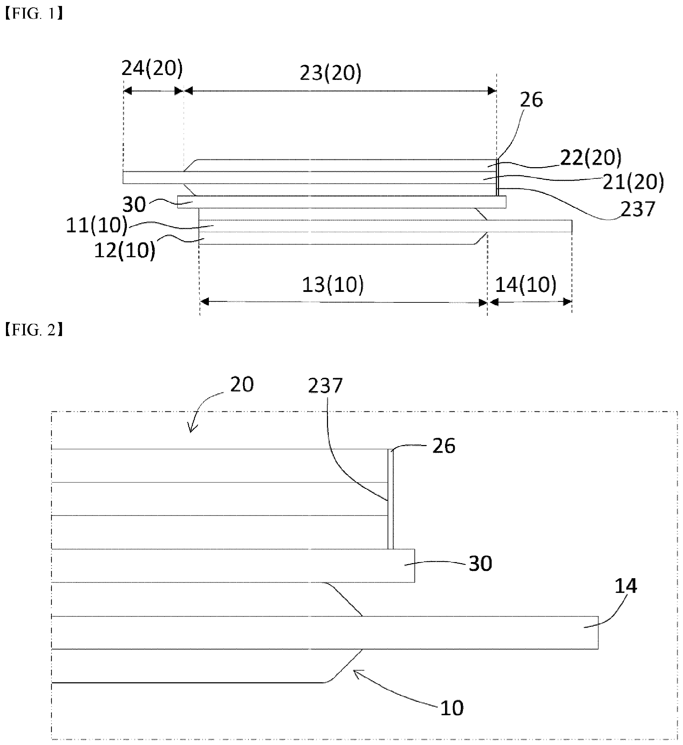

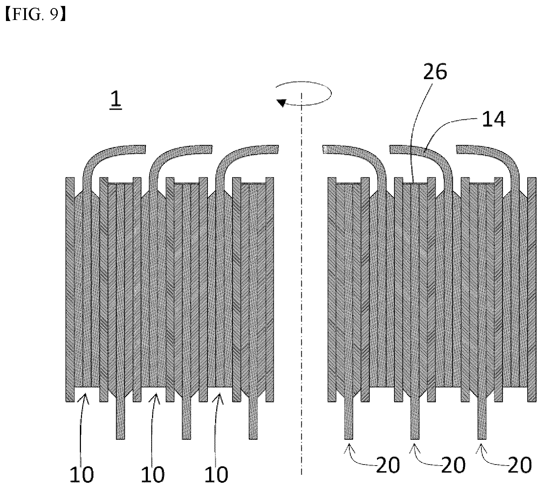

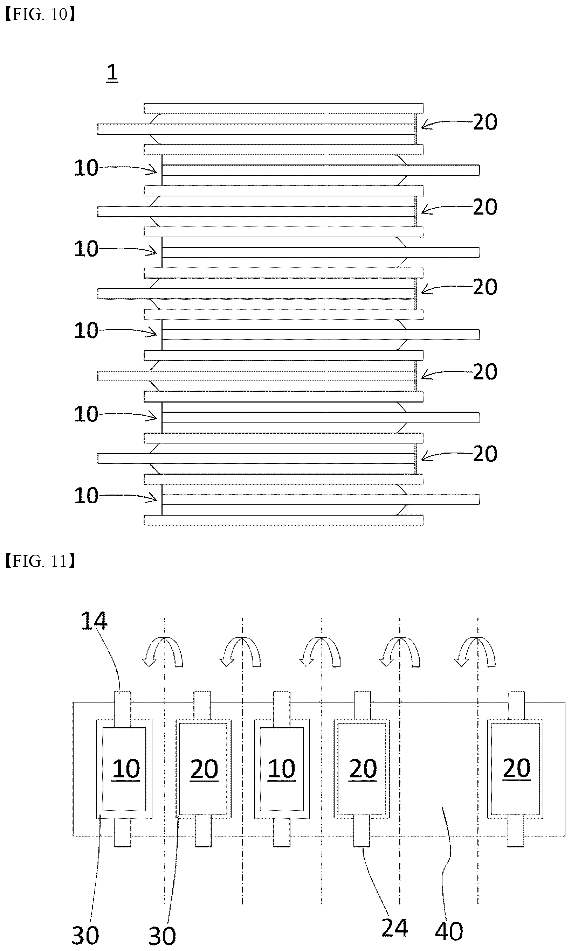

Referring to FIGS. 1 to 5, in an electrode assembly of a first embodiment, one or more first electrode plates 10, separators 30, and second electrode plates 20 are stacked. For convenience of description, a structure in which one first electrode plate 10, one separator 30, and one second electrode plate 20 are stacked is illustrated in FIGS. 1 to 5. The electrode assembly described in the first embodiment may be processed in a jelly-roll type of a fifth embodiment, which will be described below with reference to FIG. 9, processed in a stack-type of a sixth embodiment, which will be described below with reference to FIG. 10, or processed in a stack-folding type of a seventh embodiment to be described below with respect to FIG. 11, and thus manufactured as a final electrode assembly.

The first electrode plate 10 may include a first current collecting portion 13, in which a first active material 12 is applied to both surfaces of a first metal foil 11, and a first electrode tab portion 14 which is positioned on one side of the first electrode plate 10 in a width direction and to which the first active material 12 is not applied.

The second electrode plate 20 may include a second current collecting portion 23, in which a second active material 22 is applied to both surfaces of a second metal foil, and a second electrode tab portion 24 which is positioned on the other side of the second electrode plate 20 in the width direction and to which the second active material 22 is not applied.

The first electrode plate 10 may be a positive electrode plate, and the second electrode plate 20 may be a negative electrode plate. However, the reverse of the above description is also possible.

In the present invention, the positive electrode active material coated on the positive electrode plate and the negative electrode active material coated on the negative electrode plate may be used without limitation as long as the active materials are known in the art.

The positive electrode active material may include a layered compound or compound substituted with one or more transition metals such as lithium cobalt oxide (LiCoO₂) and lithium nickel oxide (LiNiO₂); lithium manganese oxides (LiMnO₂) such as the chemical formula Li₁₋ₓMn₂ₓO₄ (where x is 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni site type lithium nickel oxides expressed by the chemical formula LiNi₁₋ₓMₓO₂ (where M is Co, Mn, Al, Cu, Fe, Mg, B, or Ga and x is 0.01 to 0.3); lithium manganese composite oxides expressed by the chemical formula LiMn₂₋ₓMₓO₂ (where M=Co, Ni, Fe, Cr, Zn, or Ta and x=0.01 to 0.1) or Li₂Mn₃MO₈ (where M=Fe, Co, Ni, Cu, or Zn); LiMn₂O₄ in which Li in the formula is partially substituted with alkaline earth metal ions; a disulfide compound; and Fe₂(MoO₄)₃, or a compound whose main component is a lithium intercalation material such as a composite oxide formed by a combination thereof. Although the above types are used as the positive electrode active material, the present invention is not limited thereto.

For example, the positive electrode current collector has a thickness of 3 to 500 µm. The positive electrode current collector is not particularly limited as long as it has conductivity without causing chemical changes in a battery. Examples of the positive electrode current collector may include stainless steel, aluminum, nickel, titanium, calcined carbon, or aluminum or stainless steel whose surface has been treated with carbon, nickel, titanium, silver, or the like. The electrode current collector may have fine irregularities formed in a surface thereof to increase the adhesion between the electrode current collector and the positive electrode active material. The electrode current collector may be used in various forms such as a film, a sheet, a foil, a net, a porous body, a foamed body, a non-woven fabric body, and the like.

A conductive material may be additionally mixed with positive electrode active material particles. The conductive material is added in an amount of 1 to 50 wt% based on the total weight of the mixture including the positive electrode active material. The conductive material is not particularly limited as long as it has high conductivity without causing chemical changes in a battery. Examples of the conductive material may include graphite such as natural graphite and artificial graphite; carbon black such as carbon black, acetylene black, Ketjen black, channel black, furnace black, lamp black, and thermal black; conductive fibers such as carbon fiber and metal fiber; metal powders such as aluminum, and nickel powders; carbon fluoride powder; conductive whiskers such as zinc oxide and potassium titanate; conductive oxides such as titanium oxide; and conductive materials such as a polyphenylene derivative.

Further, the negative electrode sheet may be fabricated by applying and drying negative electrode active material particles on a negative electrode current collector, and may further include components such as the conductive material described above, a binder, a solvent, and the like as needed.

For example, the negative electrode current collector has a thickness of 3 to 500 µm. The negative electrode current collector is not particularly limited as long as it has conductivity without causing chemical changes in a battery. Examples of the negative electrode current collector may include copper, stainless steel, aluminum, nickel, titanium, calcined carbon, aluminum or stainless steel whose surface has been treated with carbon, nickel, titanium, silver, or the like, an aluminum-cadmium alloy, or the like. In addition, like the positive electrode current collector, fine irregularities may be formed in the surface to enhance the binding force of the negative electrode active material, and may be used in various forms such as a film, a sheet, a foil, a net, a porous body, a foamed body, a nonwoven fabric body, and the like.

Examples of the negative electrode active material may include a carbon such as non-graphitized carbon or graphite-based carbon; a metal complex oxide such as LiₓFe₂O₃ (0<=x<=1), LiₓWO₂ (0<=x<=1), SnₓMe₁₋ₓMe'yO_{z} (Me: Mn, Fe, Pb, Ge; Me' : Al, B, P, Si, elements in Group I, II, and III on the periodic table, a halogen; 0 <x<=1); 1<=y<=3; 1 <= z <= 8); a lithium metal; a lithium alloy; a silicon-based alloy; a tin-based alloy; an oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer such as polyacetylene; a Li-Co-Ni-based material, or the like.

A binder polymer capable of being used in the electrode sheets 11 and 12 is a component that assists in bonding the electrode active material particles and the conductive material and binding the electrode active material particles to the electrode current collector, and added in an amount of, for example, 1 to 50 wt% based on the total weight of the mixture including the electrode active material particles. Examples of the binder polymer may include at least one binder polymer selected from the group consisting of polyvinylidene fluoride-co-hexafluoropropylene (PVdF-HFP), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, or a mixture of two or more thereof, but the present invention is not limited thereto.

Non-limiting examples of the solvent used in the manufacturing of the electrodes include acetone, tetrahydrofuran, methylene chloride, chloroform, dimethylformamide, N-methyl-2-pyrrolidone (NMP), cyclohexane, water, or a mixture thereof. Such solvents provide an appropriate level of viscosity so that a slurry coating layer can be formed at a desired level on a surface of the electrode current collector.

The negative electrode may include a current collector; and a negative electrode active material layer located on at least one surface of the current collector and including a negative electrode active material, a binder polymer, and a conductive material, wherein the negative active material layer includes a lower layer region in surface contact with the current collector and an upper layer region extending to the surface of the negative electrode active material layer while in surface contact with the lower layer region. The lower layer region and the upper layer region may each independently include at least one of graphite and a silicon-based compound as an anode active material.

The lower layer region may include natural graphite as an anode active material, and the upper layer region may include artificial graphite as an anode active material.

Each of the lower layer region and the upper layer region may independently further include a silicon-based compound as an anode active material.

The silicon-based compound may include at least one of SiOₓ (0≤x≤2) and SiC.

According to one embodiment of the present invention, the negative electrode may be manufactured by applying and drying a lower-layer slurry including a lower-layer negative electrode active material to a current collector to form a lower-layer area, and then applying and drying an upper-layer slurry including an upper-layer negative electrode active material on the lower-layer area to form an upper-layer area.

In addition, according to one embodiment of the present invention, the negative electrode may be manufactured by a method including: preparing a lower-layer slurry including a lower-layer negative electrode active material and an upper-layer slurry including an upper-layer negative electrode active material;
coating the lower-layer slurry on one surface of a negative electrode current collector, and coating the upper-layer slurry on the lower-layer slurry at the same time or with a predetermined time difference; and
drying the coated lower-layer slurry and the coated upper-layer slurry at the same time to form an active material layer.

In the case of being manufactured by the latter method, a mixing area (intermixing) in which these different kinds of active materials are mixed with each other may exist in a portion in which the lower-layer area and the upper-layer area are in contact with each other in the negative electrode. This is because, when the lower-layer slurry including the lower-layer negative electrode active material and the upper-layer slurry including the upper-layer negative electrode active material are continuously coated on the current collector at the same time or with a very short time difference and then dried at the same time to form an active material layer, a predetermined mixing section occurs at an interface at which the lower-layer slurry and the upper-layer slurry are in contact before drying, and then the mixing section becomes a layer form of the mixing area while being dried.

In the active material layer of the negative electrode according to one embodiment of the present invention, a weight ratio (or a ratio of a loading amount per unit area) of the upper-layer area and the lower-layer area may be 20:80 to 50:50, and specifically 25:75 to 50:50.

Thicknesses of the lower-layer area and the upper-layer area of the active material layer of the negative electrode according to the present invention may not completely match thicknesses of the coated lower-layer slurry and the coated upper-layer slurry. However, as a result of a drying or selective rolling process, a ratio of the thicknesses of the lower-layer area and the upper-layer area of the active material layer of the negative electrode according to the present invention finally obtained may match a ratio of the thicknesses of the coated lower-layer slurry and the coated upper-layer slurry.

According to one embodiment of the present invention in which the first slurry is coated and the second slurry is coated on the first slurry at the same time or with a predetermined time difference, the predetermined time difference may be 0.6 seconds or less, 0.02 seconds to 0.6 seconds, 0.02 seconds to 0.06 seconds, or 0.02 seconds to 0.03 seconds. The time difference is generated during coating of the first slurry and the second slurry due to coating equipment, and thus it may be more preferable to coat the first slurry and the second slurry at the same time. The method of coating the second slurry on the first slurry may use a device such as a double slot die or the like.

The forming of the active material layer may further include rolling the active material layer after the drying. In this case, the rolling may be performed by a method commonly used in the art, such as roll pressing, and, for example, may be performed at a pressure of 1 MPa to 20 MPa and a temperature of 15 °C to 30 °C.

The drying of the coated lower-layer slurry and the coated upper-layer slurry at the same time to form the active material layer may be performed using a device in which a hot air drying device and an infrared drying device are combined, and may be implemented by a method commonly used in the art.

A weight percent (wt%) of a first binder polymer in a solid content of the lower-layer slurry may be equal to or greater than a weight percent (wt%) of a second binder polymer in a solid content of the upper-layer slurry. According to one embodiment of the present invention, the weight percent (wt%) of the first binder polymer in the solid content of the lower-layer slurry may be 1.0 to 4.2 times, 1.5 to 3.6 times, or 1.5 to 3 times of the weight percent (wt%) of the second binder polymer in the solid content of the upper-layer slurry.

In this case, when the ratio of the weight percent (wt%) of the first binder in the coated lower-layer slurry and the weight percent (wt%) of the second binder in the coated upper-layer slurry satisfies the above range, since the binder in the lower-layer area is not too small, deintercalation of the electrode layer does not occur, and since the binder in the upper-layer area is not too great, the resistance of the upper-layer area of the electrode may be reduced, which may be advantageous for fast charging performance.

In the solid content of the lower-layer slurry, the weight percent (wt%) of the first binder polymer may be 2 to 30 wt%, 5 to 20 wt%, or 5 to 20 wt%, and the ratio (wt%) of the second binder polymer in the solid content of the upper-layer slurry may be 0.5 to 20 wt%, 1 to 15 wt%, 1 to 10 wt%, or 2 to 5 wt%.

The total ratio (wt%) of the first binder polymer and the second binder polymer in the solid content of all of the lower-layer slurry and the upper-layer slurry may be 2 to 20 wt%, or 5 to 15 wt%.

The electrode assembly is manufactured by alternately stacking the first electrode plate 10 and the second electrode plate 20 with the separator 30 interposed therebetween. All of the first electrode tab portions 14 of the stacked first electrode plates 10 extend to further protrude toward one side in the width direction than the separator 30, and all of the second electrode tab portions 24 of the stacked second electrode plates 20 extend to further protrude toward the other side in the width direction than the separator 30.

In the embodiment, a structure in which both the first electrode plate 10 and the second electrode plate 20 have the electrode tab portions to which active materials are not applied is exemplified. However, the present invention is not limited to such a structure. For example, the first electrode plate 10 may have a form including the first electrode tab portion 14, but the second electrode plate 20 may have a form not including the second electrode tab portion, and the second electrode plate 20 may have a form including the second electrode tab portion 24, but the first electrode plate 10 may have a form not including the first electrode tab portion.

The electrode assembly of the embodiment has a structure in which the second current collecting portion 23 of the second electrode plate 20 and the first electrode tab portion 14 of the first electrode plate 10 face each other with one side edge of the separator 30 in the width direction interposed therebetween.

In addition, the electrode assembly may have a structure in which the first current collecting portion 13 of the first electrode plate 10 and the second electrode tab portion of the second electrode plate 20 face each other with the other side edge of the separator 30 in the width direction interposed therebetween.

In the present invention, an insulating coating 26 is formed on a slit surface of the first electrode plate 10 and/or a slit surface 237 of the second electrode plate 20. In the embodiment, a structure in which the insulating coating 26 is formed only on the slit surface 237 of the second electrode plate 20, and the insulating coating is not formed on the slit surface 237 of the first electrode plate 10 is exemplified.

The insulating coating 26 is provided on the slit surface 237 of the second electrode plate 20, which is disposed adjacent to the first electrode tab portion 14 with the separator 30 interposed therebetween, at one side end portion of the electrode assembly.

According to the embodiment, the second electrode plate 20 may be larger than the first electrode plate 10 in the width direction. According to the embodiment, the second current collecting portion 23 may be larger than the first current collecting portion 13 in the width direction. Accordingly, the possibility that the first electrode tab portion 14 is short-circuited with the second current collecting portion 23 when the first electrode tab portion 14 is curved or bent may be greater than the possibility that the second electrode tab portion 24 is short-circuited with the first current collecting portion 13 when the second electrode tab portion 24 is curved or bent.

The other side end portion of the first electrode plate 10 in the width direction may be slit after the first active material 12 is applied to both surfaces of the first metal foil 11, thereby forming the slit surface.

One side end portion of the second electrode plate 20 in the width direction may be slit after the second active material 22 is applied to both surfaces of a second metal foil 21, thereby forming the slit surface 237.

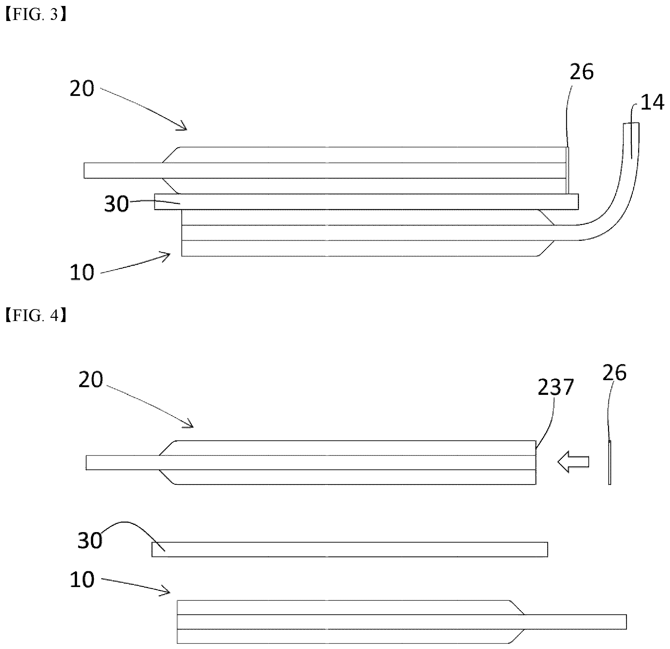

The insulating coating 26 may be applied to the slit surface 237 after the second electrode plate 20 is slit as shown in FIG. 4.

An insulating coating material for the insulating coating 26 may be a colloidal solution in which ceramic-based insulating particles are dispersed. The insulating coating 26 may be completed by applying the insulating coating material to the slit surface 237 and curing the insulating coating material by a method such as heating and drying.

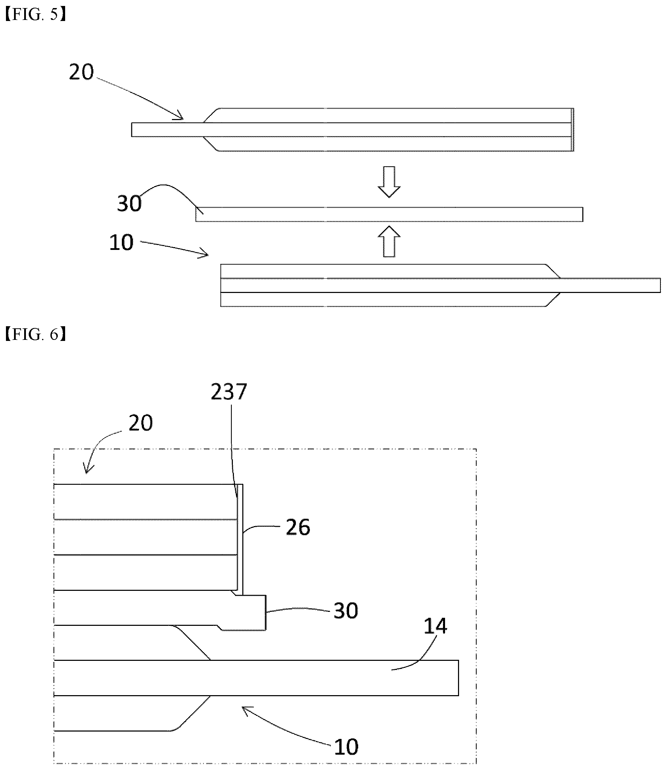

In addition, as shown in FIG. 5, the electrode assembly may be manufactured by stacking the first electrode plate 10, the separator 30, and the second electrode plate 20 on which the insulating coating 26 is formed.

The insulating coating 26 may be already coated before stacking the second electrode plate 20 on the separator 30. In addition, the separator 30 may be provided in a sheet shape.

According to the first embodiment, the insulating coating 26 may cover the entire slit surface 237 of the second electrode plate 20 in a stacking direction of the electrode assembly. Then, both surfaces of the second electrode plate 20 are covered by the separators 30 stacked thereon, and one side end portion of the second electrode plate 20 in the width direction may be covered by the insulating coating 26.

Accordingly, even when the first electrode tab portion 14 is bent as shown in FIG. 3, the phenomenon that the first electrode tab portion 14 comes into contact with the slit surface 237 of the second electrode plate 20 to cause a short circuit may be prevented.

### [Second embodiment]

Hereinafter, the second embodiment of the electrode assembly according to the present invention will be described with reference to FIG. 6. In describing the second embodiment, differences from the first embodiment will be mainly described. Accordingly, details not specifically described in the second embodiment will be understood from other embodiments including the first embodiment.

The insulating coating 26 applied to the electrode assembly according to the second embodiment covers the entire slit surface 237 of the second electrode plate 20 in the stacking direction of the electrode assembly, and in connection therewith, further covers a partial section of a first surface of the second electrode plate 20 facing the separator 30.

A portion of the first electrode plate facing the portion on which the insulating coating 26 is formed, with the separator 30 therebetween may be the first electrode tab portion 14. That is, since the first active material 12 is not applied to the portion of the first electrode plate 10 disposed to face the insulating coating 26 and the separator 30, a small free space may be provided between the first electrode tab portion 14 and the separator 30.

Accordingly, even when a thickness of the portion of the second electrode plate 20, on which the insulating coating 26 is formed, is greater than a thickness of the second current collecting portion 23 of the second electrode plate 20, there is room for the separator 30 to be offset and deformed toward the first electrode tab portion 14. Then, even when the portion of the insulating coating 26 of the second electrode plate 20 is thicker than the other portion of the second electrode plate 20, the overall stacked structure of the electrode assembly may be maintained in a parallel configuration.

Further, when the insulating coating 26 further covers the partial section of the first surface of the second electrode plate 20 facing the separator 30, a short circuit between the first electrode tab portion 14 and the second electrode plate 20 may be more reliably prevented even when the first electrode tab portion 14 is rolled between the second electrode plate 20 and the separator 30 in a process of winding the electrode assembly in a jelly-roll type and bending the first electrode tab portion 14 as in the fifth embodiment to be described below. This is also the case in the third and fourth embodiments to be described below.

### [Third embodiment]

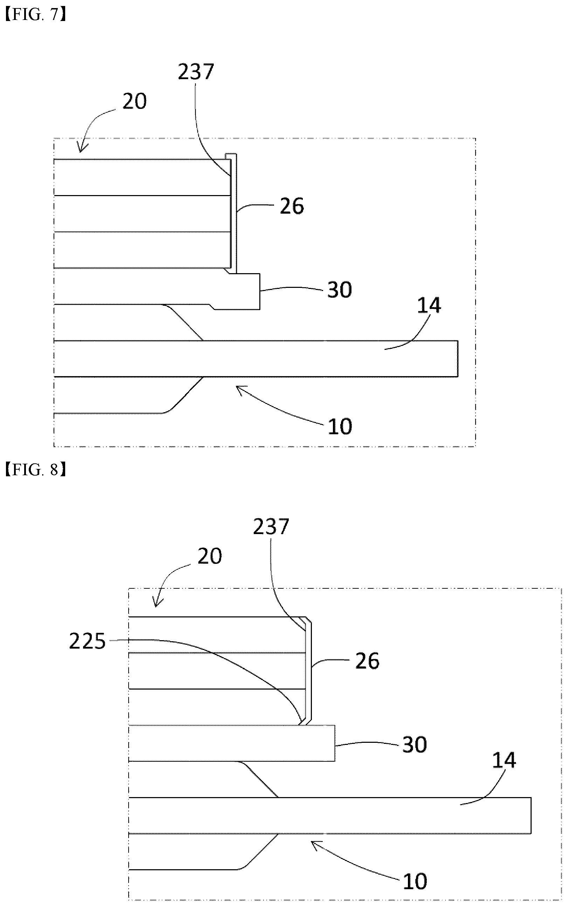

Hereinafter, the third embodiment of the electrode assembly according to the present invention will be described with reference to FIG. 7. In describing the third embodiment, differences from the second embodiment will be mainly described.

The insulating coating 26 applied to the electrode assembly according to the third embodiment covers the entire slit surface 237 of the second electrode plate 20 in the stacking direction of the electrode assembly, and in connection therewith, covers a partial section of the first surface of the second electrode plate 20, and further covers a partial section of the second surface of the second electrode plate 20, which is an opposite surface of the first surface.

In FIG. 7, another separator and another first electrode plate stacked on an upper portion of the second electrode plate 20 are not illustrated for convenience of description, but, as shown in FIG. 10, the actual electrode assembly may be in the form in which a plurality of first electrode plates 10 and a plurality of second electrode plates 20 are alternately disposed with the separator 30 interposed therebetween.

Then, as described in the second embodiment, in the same way that the overall stacked structure of the electrode assembly are stacked in parallel by the insulating coating 26 covering the end portion of the first surface even though the thickness of the corresponding portion of the second electrode plate 20 is greater than that of another portion, the overall stacked structure of the electrode assembly may be stacked in a parallel configuration by the insulating coating 26 covering the end portion of the second surface, even though the thickness of the corresponding portion of the second electrode plate 20 is further greater than that of another portion.

### [Fourth embodiment]

Hereinafter, the fourth embodiment of the electrode assembly according to the present invention will be described with reference to FIG. 8. In describing the fourth embodiment, differences from the third embodiment will be mainly described.

When the slit surface 237 is processed by slitting one side end portion of the second electrode plate 20, as shown in FIG. 8, a processing surface 225 may be formed on a corner portion of the slit surface 237.

The slitting process is performed by supporting a lower portion of a cut portion with a lower blade and pressing an upper portion of the cut portion with an upper blade, and in this case, the second active material 22 applied to the second electrode plate 20 may be pressed or rolled by the upper and lower blades to form the processing surface 225. The processing surface 225 may be in the form of a chamfer (chamfer) as shown in the drawing or may be in the form of a fillet (round).

For the slitting processing method, various methods such as a mechanical processing method through sharp blades and an optical processing method using a laser may be applied.

The processing surface 225 may be performed in a process of transferring the second electrode plate 20, after the slitting process.

After slitting one side end portion of the second electrode plate 20, in order to apply insulation coating to the corresponding area, the posture of the second electrode plate 20, which has been transferred in a lying position, is changed to an upright position and transferred, and an insulating coating may be performed on the slit surface 237 positioned at a lower end portion of the upright second electrode plate 20.

A pinch roller for supporting the end portion of the second electrode plate 20 may be used to erect the second electrode plate 20. Then, the second electrode plate 20 is transferred to the pinch roller from a horizontal transfer roller in rolling contact with a surface of the second electrode plate 20, and the posture of the second electrode plate 20 is gradually erected.

As the pinch roller supporting the lower end portion of the second electrode plate 20 presses a corner portion of the active material layer of the second electrode plate 20 while transferring the second electrode plate 20, the processing surface 225 may be formed.

Then, in insulating coating the slit surface 237 and the first and second surfaces adjacent thereto, the insulating coating 26 is formed on a portion in which the thickness is reduced by the processing surface 225, and the phenomenon that the thickness of the second electrode plate 20 becomes thicker by the insulating coating 26 may be minimized.

In addition, after the slitting process, the processing surface 225 may be more reliably formed on the corner portion of the slit surface 237 by using a pressing roll so that the processing surface 225 may be intentionally further formed on the corner portion of the slit surface 237.

Then, uniformity in the thickness of the second electrode plate 20 can be achieved despite the insulating coating 26, so that the overall stacked structure of the electrode assembly may be maintained in a parallel configuration.

### [Fifth embodiment]

Hereinafter, the fifth embodiment of the electrode assembly according to the present invention will be described with reference to FIG. 9.

An electrode assembly 1 may be manufactured in a jelly-roll type by stacking the first electrode plate 10, the separator 30, the second electrode plate 20, and the separator 30 in a form that has a predetermined width and extends long in a direction to be wound, and winding the stacked first electrode plate 10, separator 30, second electrode plate 20, and separator 30 around a winding axis. Then, the first electrode tab portion 14 and the second electrode tab portion 24 may be exposed from one side end portion (upper portion in the drawing) and the other side end portion (lower portion in the drawing) of the cylindrical electrode assembly, respectively.

As illustrated in the drawing, these electrode tab portions may be bent inward in the radial direction, or may be bent in the opposite direction, that is, outward in the radial direction. A current collecting plate (not shown) may be attached to a flat bent surface formed by bending the electrode tab portion by welding or the like.

In the embodiment, a structure in which the first electrode tab portion 14 is bent inward in the radial direction is exemplified. Even when the first electrode tab portion 14 is bent as described above, the end portion of the second electrode plate 20 adj acent to the first electrode tab portion 14 is provided with the insulating coating 26, so that a short circuit between the first electrode tab portion 14 and the slit surface of the second electrode plate 20 may be prevented.

Of course, the second electrode tab portion 24 shown in FIG. 9 may also be bent inward or outward in the radial direction. In addition, the electrode tab portion may be connected to the current collecting plate in an unbent state.

The jelly-roll type electrode assembly 1 may be used for manufacturing a secondary battery in the form of being accommodated in a cylindrical battery can (not shown).

Preferably, the cylindrical secondary battery may be, for example, a cylindrical secondary battery whose form factor ratio (defined as a value obtained by dividing a diameter of the cylindrical secondary battery by a height, that is, a ratio of diameter (Φ) to height (H)) is greater than about 0.4.

Here, the term "form factor" means a value indicating a diameter and a height of a cylindrical secondary battery. The cylindrical secondary battery according to one embodiment of the present invention may be, for example, a 46110 cell, a 48750 cell, a 48110 cell, a 48800 cell, or a 46800 cell. In the numerical value representing the form factor, first two numbers indicate a diameter of the cell, next two numbers indicate a height of the cell, and the last number "0" indicates that a cross section of the cell has a circular shape.

When an electrode assembly having a tab-less structure is applied to a cylindrical secondary battery having a form factor ratio of more than 0.4, a stress applied in the radial direction is large when the electrode tab portion is bent, and thus the electrode tab portion may be easily torn. In addition, when welding the current collecting plate to the bent surface of the electrode tab portion, it is necessary to sufficiently increase the number of overlapping layers of the electrode tab portion in order to sufficiently secure welding strength and lower a resistance. These requirement conditions may be achieved by the electrode plate and the electrode assembly according to the embodiments of the present invention described above.

A secondary battery according to one embodiment of the present invention may be a cylindrical secondary battery having a substantially cylindrical shape, whose diameter is approximately 46 mm, height is approximately 110 mm, and form factor ratio is 0.418.

A secondary battery according to another embodiment may be a cylindrical secondary battery having a substantially cylindrical shape, whose diameter is approximately 48 mm, height is approximately 75 mm, and form factor ratio is 0.640.

A secondary battery according to still another embodiment may be a cylindrical secondary battery having a substantially cylindrical shape, whose diameter is approximately 48 mm, height is approximately 110 mm, and form factor ratio is 0.418.

A secondary battery according to yet another embodiment may be a cylindrical secondary battery having a substantially cylindrical shape, whose diameter is approximately 48 mm, height is approximately 80 mm, and form factor ratio is 0.600.

A secondary battery according to yet another embodiment may be a cylindrical secondary battery having a substantially cylindrical shape, whose diameter is approximately 46 mm, height is approximately 80 mm, and form factor ratio is 0.575.

Conventionally, secondary batteries having a form factor ratio of about 0.4 or less have been used. That is, conventionally, for example, a 18650 cell, a 21700 cell, and the like were used. The 18650 cell has a diameter of approximately 18 mm, a height of approximately 65 mm, and a form factor ratio of 0.277. The 21700 cell has a diameter of approximately 21 mm, a height of approximately 70 mm, and a form factor ratio of 0.300.

### [Sixth embodiment]

Hereinafter, the sixth embodiment of the electrode assembly according to the present invention will be described with reference to FIG. 10.

The electrode assembly may be formed by stacking unit cells as shown in FIG. 10. Accordingly, a stack-type electrode assembly may be manufactured.

Here, the unit cell may be a unit cell manufactured by stacking the first electrode plate 10, the separator 30, the second electrode plate 20, and the separator 30.

The stack-type electrode assembly 1 may be used for manufacturing a secondary battery in the form of being accommodated in a pouch (not shown).

### [Seventh embodiment]

Hereinafter, the seventh embodiment of the electrode assembly according to the present invention will be described with reference to FIG. 11.

The electrode assembly may be manufactured by stacking the unit cell, in which the first electrode plate 10, the separator 30, and the second electrode plate 20 are sequentially stacked as shown in FIG. 1, on a folding separator 40 extending long in a folding direction as shown in FIG. 11.

The unit cell may be laminated in a form in which the first electrode plate 10 and the second electrode plate 20 are alternately placed at predetermined intervals along a longitudinal direction of the folding separator 40.

The innermost unit cell, which is mounted at the beginning of the folding, has an electrode plate disposed on an upper portion thereof and having the same polarity as the unit cell disposed at a position closest thereto. In addition, one empty space is placed between two adjacent unit cells. In addition, by folding the unit cells one by one, the stack-folding type electrode assembly 1 may be manufactured in a stacked structure as shown in FIG. 10.

The stack-folding type electrode assembly 1 may be used for manufacturing a secondary battery in the form of being accommodated in a pouch (not shown).

In the structure of the electrode assembly described above, by providing the insulating coating 26 on the slit surface 237 of the current collecting portion that extends wider in the width direction from among the first current collecting portion 13 and the second current collecting portion 23, a short circuit of the two electrode plates may be prevented even when the electrode assembly is manufactured by various ways as described in the embodiments.

In addition, the insulating coating 26 is formed before stacking the electrode plate and the separator, and thus the manufacturing process of the electrode assembly changes very little.

In addition, since the insulating coating 26 has little effect on the thickness of the electrode plate, or the thickness of the portion thickened by the insulating coating does not affect the stacked thickness even though the stacking is performed, the overall stacked structure of the electrode assembly may be maintained in a parallel configuration even when the electrode assembly is manufactured in different ways as described in the embodiments.

### [ Manufacturing method of second electrode plate]

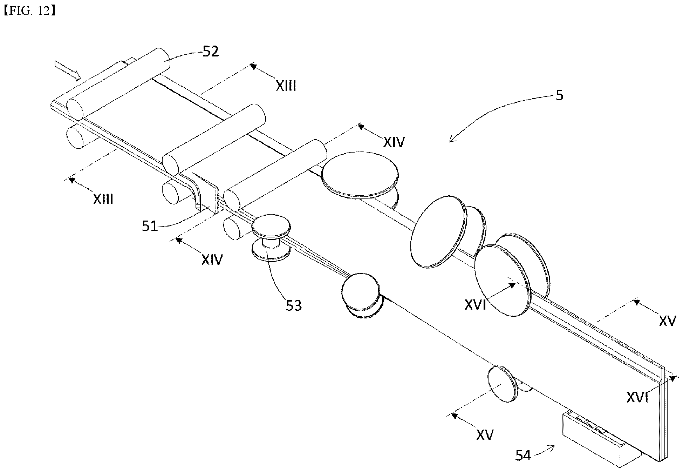

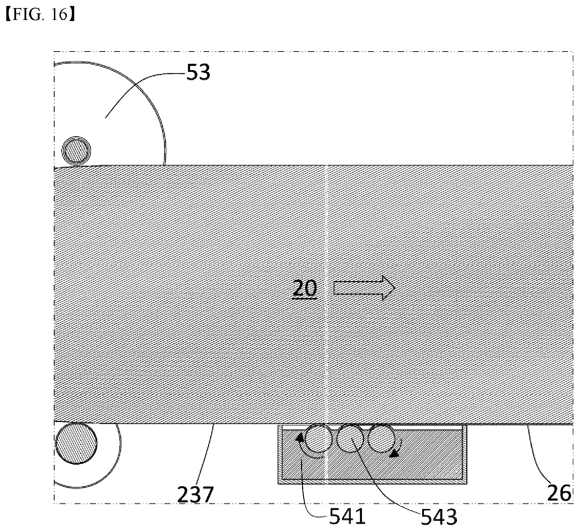

Hereinafter, a process of manufacturing the second electrode plate, including an insulating coating operation, will be described with reference to FIGS. 12 to 16.

A second electrode plate 20 may be prepared by applying a second active material 22 to both surfaces of a second metal foil 21, flattening the applied second active material 22 with a press roll, and curing the flattened second active material 22 by a method such as heating and drying, and then transferred slitting and insulating coating processing facility shown in FIG. 12.

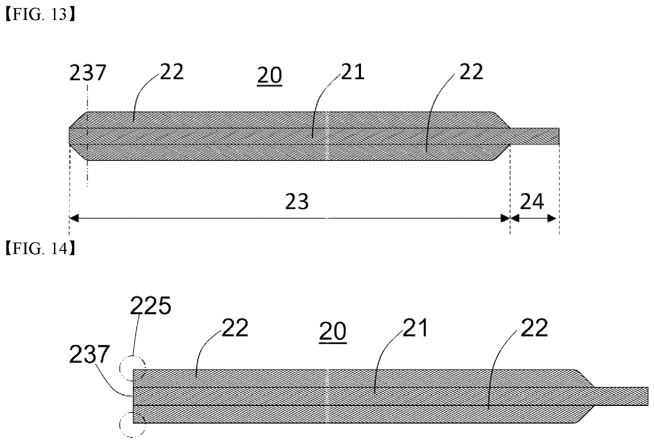

Referring to FIG. 13, slitting and insulating coating processes are performed in a state in which the second active material 22 of the second electrode plate 20 is coated on the remaining portion except for a second electrode tab portion 24 on one side end portion of the metal foil which is exposed.

The slitting process is performed by cutting a thickness reduction section of the other side end portion of the second electrode plate 20, on which the second active material 22 is coated, together with the second metal foil 21 by a slitting device 51.

After the slitting process, the other side end portion of the second electrode plate 20 has a smooth slit surface 237 as shown in FIG. 14. A processing surface 225 may be formed on both side edges of the slit surface 237. The processing surface 225 may be formed together in the slitting operation, but may be intentionally formed through separate processing.

The separate processing may be performed by a pinch roller 53 in a process of transferring the second electrode plate 20 in an upright position in order to apply an insulating coating liquid 541 to the slit surface 237 by a dipping method.

The second electrode plate 20, which has been transferred by a horizontal transfer roller 52 for slitting processing by the slitting device 51, may be erected such that the slit surface 237 is positioned downward, and transferred

The transfer may be performed by the pinch roller 53 configured to support both side end portions of the second electrode plate 20 and transfer. Of course, although not shown in FIG. 12, transfer rollers supporting both surfaces of the second electrode plate 20 may be additionally disposed between the pinch rollers 53 in a transfer direction to support the thin second electrode plate 20.

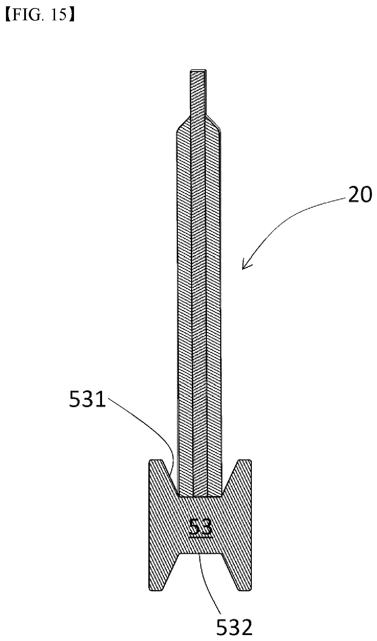

Referring to FIG. 15, the pinch roller 53 may include a support surface 532 configured to support an end surface of the second electrode plate 20 and a center guide surface 531 in the shape of an inclined surface configured to guide the end portion of the second electrode plate 20 to move the end portion of the second electrode plate 20 toward the center.

When the center guide surface 531 guides the slit surface 237 of the second electrode plate 20 to the support surface 532, both corner portions of the slit surface 237 are pressed by the center guide surface 531 to form the processing surface 225.

That is, according to the present invention, the processing surface 225 may be processed together in a process of changing and transferring the posture of the second electrode plate 20 for the insulating coating process performed by the dipping method.

The upright second electrode plate 20 passes through an insulating coating device 54, and the slit surface 237 on a lower portion thereof may be coated with the insulating coating liquid 541.

The insulating coating device 54 may coat the slit surface 237 of the second electrode plate 20 with the insulating coating liquid 541 in such a way that a lower end portion of the second electrode plate 20 is dipped while passing through a portion of the roller brush 543 immersed in the insulating coating liquid 541, wherein the portion of the roller brush 543 viscously transfers the insulating coating liquid 541 in the form of a colloidal solution.

The insulating coating liquid 541 applied thus to the slit surface 237 receives gravity downward, so that it is possible to prevent a phenomenon in which the insulating coating liquid 541 flows to both surfaces of the second electrode plate 20 to cover the surface of the second active material 22. Accordingly, the insulating coating 26 is applied only to the slit surface 237 or is applied only to a partial section of a corner portion of the second active material 22 adjacent to the slit surface 237.

The insulating coating liquid 541 may be cured by a method such as heating and drying to form an insulating coating 26 layer.

The second electrode plate 20 may be supplied to a lamination process of the first electrode plate 10 and the separator 30 in a state in which the insulating coating 26 is formed.

It should be understood that the embodiments described above are exemplary and not restrictive, and the scope of the present invention is defined by the appended claims which will be described below, rather than the above specific descriptions.

## Claims

1. An electrode assembly (1) comprising:
a first electrode plate (10), separator (30), and a second electrode plate (20) stacked on each other,
wherein the first electrode plate includes a first current collecting portion in which the first active material is applied to opposite surfaces of the first electrode plate,
wherein the second electrode plate includes a second current collecting portion in which a second active material is applied to opposite surfaces of the second electrode plate,
wherein a width of the second current collecting portion is greater than a width of the first current collecting portion,
wherein the first electrode plate (10) includes a first electrode tab portion (14) which is positioned on a first side the first electrode plate in a width direction and to which a first active material (12) is not applied,
wherein the first electrode tab portion (14) extends further outward from a first side end portion of the electrode assembly (1) than the separator (30) in the width direction,
wherein the second electrode plate has a slit surface where the second current collecting portion is slit on a first side thereof in the width direction,
wherein the slitting surface is disposed adjacent to the first electrode tab portion with the separator interposed therebetween at the first side end portion of the electrode assembly,
wherein an insulating coating (26) formed separately from the separator (30) is formed on the slit surface (237) of the second electrode plate, and
wherein a portion of the first electrode plate facing the insulating coating with the separator interposed between is the first electrode tab portion.

2. The electrode assembly of claim 1, wherein the separator (30) is stacked between the first electrode plate (10) and the second electrode plate (20), and
wherein the insulating coating (26) is formed by coating and curing an insulating liquid.

3. The electrode assembly of claim 1, wherein the insulating coating (26) covers an entirety of the slit surface (237) of the second electrode plate (20) in a stacking direction of the electrode assembly (1).

4. The electrode assembly of claim 3, wherein the insulating coating (26) further covers a partial section of a first surface of the second electrode plate (20) connected to the slit surface (237) of the second electrode plate (20) and facing the separator (30).

5. The electrode assembly of claim 4, wherein the insulating coating (26) further covers a partial section of a second surface of the second electrode plate (20) connected to the slit surface (237) of the second electrode plate (20) and opposite to the first surface.

6. The electrode assembly of claim 1, wherein a corner portion of the second active material (22) disposed on the slit surface (237) of the second current collecting portion (23) has a processing surface (225) with a decreasing thickness.

7. The electrode assembly of claim 6, wherein the processing surface (225) is formed by a slitting process.

8. The electrode assembly of claim 7, wherein the processing surface (225) is formed by a pressing process, after the slitting process.

9. The electrode assembly of claim 1, wherein the insulating coating (26) is formed by spray coating.

10. The electrode assembly of claim 1, wherein the insulating coating (26) is formed by dipping the slit surface (237) in an insulating liquid.

11. The electrode assembly of claim 1, wherein the second electrode plate (20) includes a second electrode tab portion (24) to which a second active material (22) is not applied, and
the second electrode tab portion (24) is disposed at the other side end portion of the electrode assembly (1).

12. A method of manufacturing the electrode assembly of any one of claims 1 to 11, the method comprising:
forming the second current collecting portion (23) by applying the second active material (22) to opposite surfaces of a second metal foil (21), and forming the slit surface (237) by slitting the first side of the second current collecting portion (23);
forming an insulating coating (26) on the slit surface (237); and
stacking the first electrode plate (10), the separator (30), and the second electrode plate (20) having the insulating coating (26) formed thereon.

13. The method of claim 12, further comprising winding the first electrode plate (10), the separator (30), and the second electrode plate (20) around a winding axis in a jelly-roll type in a state in which the first electrode plate (10), the separator (30), and the second electrode plate (20) are stacked.

14. The method of claim 13, further comprising forming a bent surface by bending the first electrode tab portion (14), which is exposed from an end portion of the electrode assembly wound in the jelly-roll type in a width direction, in a radial direction.

15. The method of claim 12, further comprising stacking a plurality of unit cells in which the first electrode plate (10), the separator (30), the second electrode plate (20), and the separator (30) are stacked, in a stack form.

## Patentansprüche

1. Elektrodenanordnung (1), umfassend:
eine erste Elektrodenplatte (10), einen Separator (30) und eine zweite Elektrodenplatte (20), die aufeinander gestapelt sind,
wobei die erste Elektrodenplatte einen ersten Stromsammelabschnitt umfasst, in dem das erste aktive Material auf gegenüberliegende Oberflächen der ersten Elektrodenplatte aufgebracht ist,
wobei die zweite Elektrodenplatte einen zweiten Stromsammelabschnitt umfasst, in dem ein zweites aktives Material auf gegenüberliegende Oberflächen der zweiten Elektrodenplatte aufgebracht ist,
wobei eine Breite des zweiten Stromsammelabschnitts größer als eine Breite des ersten Stromsammelabschnitts ist,
wobei die erste Elektrodenplatte (10) einen ersten Elektrodenlaschenabschnitt (14) umfasst, der auf einer ersten Seite der ersten Elektrodenplatte in einer Breitenrichtung positioniert ist und auf den kein erstes aktives Material (12) aufgebracht ist,
wobei sich der erste Elektrodenlaschenabschnitt (14) von einem ersten Seitenendabschnitt der Elektrodenanordnung (1) weiter nach außen erstreckt als der Separator (30) in der Breitenrichtung,
wobei die zweite Elektrodenplatte eine Schlitzoberfläche aufweist, wo der zweite Stromsammelabschnitt auf einer ersten Seite davon in der Breitenrichtung geschlitzt ist,
wobei die Schlitzoberfläche benachbart zu dem ersten Elektrodenlaschenabschnitt angeordnet ist, wobei der Separator dazwischen an dem ersten Seitenendabschnitt der Elektrodenanordnung angeordnet ist,
wobei eine Isolierbeschichtung (26), die getrennt von dem Separator (30) ausgebildet ist, auf der Schlitzoberfläche (237) der zweiten Elektrodenplatte ausgebildet ist, und
wobei ein Abschnitt der ersten Elektrodenplatte, der der Isolierbeschichtung zugewandt ist, wobei der Separator dazwischen angeordnet ist, der erste Elektrodenlaschenabschnitt ist.

2. Elektrodenanordnung nach Anspruch 1, bei der der Separator (30) zwischen der ersten Elektrodenplatte (10) und der zweiten Elektrodenplatte (20) gestapelt ist, und
bei der die Isolierbeschichtung (26) durch Beschichten und Härten einer Isolierflüssigkeit ausgebildet ist.

3. Elektrodenanordnung nach Anspruch 1, bei der die Isolierbeschichtung (26) eine Gesamtheit der Schlitzoberfläche (237) der zweiten Elektrodenplatte (20) in einer Stapelrichtung der Elektrodenanordnung (1) bedeckt.

4. Elektrodenanordnung nach Anspruch 3, bei der die Isolierbeschichtung (26) ferner einen Teilabschnitt einer ersten Oberfläche der zweiten Elektrodenplatte (20) bedeckt, die mit der Schlitzoberfläche (237) der zweiten Elektrodenplatte (20) verbunden ist und dem Separator (30) zugewandt ist.

5. Elektrodenanordnung nach Anspruch 4, bei der die Isolierbeschichtung (26) ferner einen Teilabschnitt einer zweiten Oberfläche der zweiten Elektrodenplatte (20) bedeckt, die mit der Schlitzoberfläche (237) der zweiten Elektrodenplatte (20) verbunden ist und der ersten Oberfläche gegenüberliegt.

6. Elektrodenanordnung nach Anspruch 1, bei der ein Eckabschnitt des zweiten aktiven Materials (22), der auf der Schlitzoberfläche (237) des zweiten Stromsammelabschnitts (23) angeordnet ist, eine Bearbeitungsoberfläche (225) mit einer abnehmenden Dicke aufweist.

7. Elektrodenanordnung nach Anspruch 6, bei der die Bearbeitungsoberfläche (225) durch einen Schlitzprozess ausgebildet ist.

8. Elektrodenanordnung nach Anspruch 7, bei der die Bearbeitungsoberfläche (225) durch einen Pressprozess nach dem Schlitzprozess ausgebildet ist.

9. Elektrodenanordnung nach Anspruch 1, bei der die Isolierbeschichtung (26) durch Sprühbeschichten ausgebildet ist.

10. Elektrodenanordnung nach Anspruch 1, bei der die Isolierbeschichtung (26) durch Eintauchen der Schlitzoberfläche (237) in eine Isolierflüssigkeit ausgebildet ist.

11. Elektrodenanordnung nach Anspruch 1, bei der die zweite Elektrodenplatte (20) einen zweiten Elektrodenlaschenabschnitt (24) umfasst, auf den kein zweites aktives Material (22) aufgebracht ist, und
der zweite Elektrodenlaschenabschnitt (24) an dem anderen Seitenendabschnitt der Elektrodenanordnung (1) angeordnet ist.

12. Verfahren zum Herstellen der Elektrodenanordnung nach einem der Ansprüche 1 bis 11, wobei das Verfahren umfasst:
Ausbilden des zweiten Stromsammelabschnitts (23) durch Aufbringen des zweiten aktiven Materials (22) auf gegenüberliegende Oberflächen einer zweiten Metallfolie (21) und Ausbilden der Schlitzfläche (237) durch Schlitzen der ersten Seite des zweiten Stromsammelabschnitts (23);
Ausbilden einer Isolierbeschichtung (26) auf der Schlitzfläche (237); und
Stapeln der ersten Elektrodenplatte (10), des Separators (30) und der zweiten Elektrodenplatte (20), auf der die Isolierbeschichtung (26) ausgebildet ist.

13. Verfahren nach Anspruch 12, ferner umfassend Wickeln der ersten Elektrodenplatte (10), des Separators (30) und der zweiten Elektrodenplatte (20) um eine Wickelachse in einem Jelly-Roll-Typ in einem Zustand, in dem die erste Elektrodenplatte (10), der Separator (30) und die zweite Elektrodenplatte (20) gestapelt sind.

14. Verfahren nach Anspruch 13, ferner umfassend Ausbilden einer gebogenen Oberfläche durch Biegen des ersten Elektrodenlaschenabschnitts (14), der von einem Endabschnitt der Elektrodenanordnung, die in dem Jelly-Roll-Typ gewickelt ist, in einer Breitenrichtung freiliegt, in einer radialen Richtung.

15. Verfahren nach Anspruch 12, ferner umfassend Stapeln einer Vielzahl von Einheitszellen, in denen die erste Elektrodenplatte (10), der Separator (30), die zweite Elektrodenplatte (20) und der Separator (30) gestapelt sind, in einer Stapelform.

## Revendications

1. Ensemble d'électrode (1) comprenant :
une première plaque d'électrode (10), un séparateur (30), et une deuxième plaque d'électrode (20) empilés l'un sur l'autre,
la première plaque d'électrode comprenant une première partie collectrice de courant, dans laquelle la première matière active est appliquée sur des surfaces opposées de la première plaque d'électrode,
la deuxième plaque d'électrode comprenant une deuxième partie collectrice de courant, dans laquelle une deuxième matière active est appliquée sur des surfaces opposées de la deuxième plaque d'électrode,
une largeur de la deuxième partie collectrice de courant étant supérieure à une largeur de la première partie collectrice de courant,
la première plaque d'électrode (10) comprenant une première partie de patte d'électrode (14) positionnée sur un premier côté de la première plaque d'électrode, dans le sens de la largeur, et sur laquelle une première matière active (12) n'est pas appliquée,
la première partie de patte d'électrode (14) s'étendant davantage vers l'extérieur, depuis une première partie d'extrémité latérale de l'ensemble d'électrode (1), que le séparateur (30) dans le sens de la largeur,
la deuxième plaque d'électrode possédant une surface fendue dans laquelle la deuxième partie collectrice de courant est fendue sur un premier côté de celle-ci dans le sens de la largeur,
la surface à fente étant disposée adjacente à la première partie de patte d'électrode, le séparateur étant intercalé entre elles à la première partie d'extrémité latérale de l'ensemble d'électrode,
un revêtement isolant (26) formé séparément du séparateur (30) étant formé sur la surface fendue (237) de la deuxième plaque d'électrode, et
une partie de la première plaque d'électrode étant située face au revêtement isolant, le séparateur intercalé entre eux étant la première partie de patte d'électrode.

2. Ensemble d'électrode selon la revendication 1, le séparateur (30) étant empilé entre la première plaque d'électrode (10) et la deuxième plaque d'électrode (20), et
le revêtement isolant (26) étant formé par le revêtement et le durcissement d'un liquide isolant.

3. Ensemble d'électrode selon la revendication 1, le revêtement isolant (26) couvrant l'intégralité de la surface fendue (237) de la deuxième plaque d'électrode (20) dans une direction d'empilement de l'ensemble d'électrode (1).

4. Ensemble d'électrode selon la revendication 3, le revêtement isolant (26) couvrant en outre une section partielle d'une première surface de la deuxième plaque d'électrode (20) connectée à la surface fendue (237) de la deuxième plaque d'électrode (20) et faisant face au séparateur (30).

5. Ensemble d'électrode selon la revendication 4, le revêtement isolant (26) couvrant en outre une section partielle d'une deuxième surface de la deuxième plaque d'électrode (20) connectée à la surface fendue (237) de la deuxième plaque d'électrode (20) et faisant face à la première surface.

6. Ensemble d'électrode selon la revendication 1, une partie d'angle de la deuxième matière active (22) disposée sur la surface fendue (237) de la deuxième partie collectrice de courant (23) possédant une surface de traitement (225) avec une épaisseur décroissante.

7. Ensemble d'électrode selon la revendication 6, la surface de traitement (225) étant formée par un processus de fendage.

8. Ensemble d'électrode selon la revendication 7, la surface de traitement (225) étant formée par un processus de pression, à la suite du processus de fendage.

9. Ensemble d'électrode selon la revendication 1, le revêtement isolant (26) étant formée avec un revêtement par pulvérisation.

10. Ensemble d'électrode selon la revendication 1, le revêtement isolant (26) étant formée en trempant la surface fendue (237) dans un liquide isolant.

11. Ensemble d'électrode selon la revendication 1, la deuxième plaque d'électrode (20) comprenant une deuxième partie de patte d'électrode (24) sur laquelle une deuxième matière active (22) n'est pas appliquée, et
la deuxième partie de patte d'électrode (24) étant disposée sur l'autre partie d'extrémité latérale de l'ensemble d'électrode (1).

12. Procédé de fabrication d'un ensemble d'électrode selon une quelconque des revendications 1 à 11, le procédé comprenant :
la formation de la deuxième partie collectrice de courant (23) par l'application de la deuxième matière active (22) sur des surfaces opposées d'une deuxième feuille métallique (21), et la formation de la surface fendue (237) en fendant le premier côté de la deuxième partie collectrice de courant (23) ;
la formation d'un revêtement isolant (26) sur la surface fendue (237) ; et
l'empilage de la première plaque d'électrode (10), du séparateur (30), et de la deuxième plaque d'électrode (20) sur laquelle est formé le revêtement isolant (26).

13. Procédé selon la revendication 12, comprenant en outre l'enroulement de la première plaque d'électrode (10), du séparateur (30), et de la deuxième plaque d'électrode (20) autour d'un axe d'enroulement dans un type enroulé, dans un état dans lequel la première plaque d'électrode (10), le séparateur (30), et la deuxième plaque d'électrode (20) sont empilés.

14. Procédé selon la revendication 13, comprenant en outre la formation d'une surface pilée en pliant la première partie de patte d'électrode (14), qui est exposée d'une partie terminale de l'ensemble d'électrode du type enroulé dans le sens de la largeur, dans une direction radiale.

15. Procédé selon la revendication 12, comprenant en outre l'empilage d'une pluralité d'éléments unitaires, dans lequel la première plaque d'électrode (10), le séparateur (30), la deuxième plaque d'électrode (20), et le séparateur (30) sont empilés sous forme de pile.
